**Europäisches Patentamt**

**European Patent Office**

**Office européen des brevets**

(19)

(11) Veröffentlichungsnummer: **0 073 966**
**B1**

(12)

# EUROPÄISCHE PATENTSCHRIFT

(45) Veröffentlichungstag der Patentschrift:
**29.01.86**

(51) Int. Cl.⁴: **B 60 C 11/06**

(21) Anmeldenummer: **82107460.6**

(22) Anmeldetag: **17.08.82**

(54) **Laufflächengestaltung für Fahrzeugluftreifen.**

(30) Priorität: **04.09.81 DE 8125725 U**

(43) Veröffentlichungstag der Anmeldung:
**16.03.83 Patentblatt 83/11**

(45) Bekanntmachung des Hinweises auf die Patenterteilung:
**29.01.86 Patentblatt 86/5**

(84) Benannte Vertragsstaaten:
**AT BE CH DE FR GB IT LI NL SE**

(56) Entgegenhaltungen:
**DE - A - 1 605 637**
**DE - A - 2 127 470**
**FR - A - 1 107 769**
**FR - A - 1 224 642**
**FR - A - 1 519 649**
**FR - A - 2 283 788**
**LU - A - 79 499**

(73) Patentinhaber: **Continental Gummi-Werke
Aktiengesellschaft, Königsworther Platz 1,
D-3000 Hannover 1 (DE)**

(72) Erfinder: **Kuhn, Dieter, Dr., Buchholzwiesen 4,
D-3006 Burgwedel 1 (DE)**
Erfinder: **Frerichs, Udo, Buchenweg 7,
D-3012 Langenhagen 8 (DE)**
Erfinder: **Pieper, Henner, Bahnhofstrasse 2B,
D-3012 Langenhagen 1 (DE)**
Erfinder: **Rach, Heinz-Dieter, Planetenring 32,
D-3008 Garbsen 1 (DE)**

## Beschreibung

Die Erfindung betrifft eine Laufflächengestaltung für Luftreifen, insbesondere für Kraftfahrzeuge, mit zwei Umfangsrippen, die aus in Reifenumfangsrichtung aufeinanderfolgenden im wesentlichen rechteckigen Blöcken bestehen, welche durch S-förmige Feineinschnitte voneinander getrennt sind, mit mehreren unter 90° zickzackförmig umlaufenden Hauptnuten und mit jeweils einer Entkopplungsnut, die die Lauffläche von der Seitenwandzone des Reifens entkoppelt. Eine solche Laufflächengestaltung ist in der DE-A-1605637 gezeigt.

Im Zuge der Energieverknappung und -verteuerung sind bereits Reservereifen für Kraftfahrzeuge vorgeschlagen worden, die sich durch eine Raum- und Gewichtseinsparung auszeichnen. Diese bekannten Reifen, die zum Teil auf eine möglichst hohe Geräuschabgabe ausgelegt sind, weisen häufig Profilgestaltungen auf, die bezüglich wichtiger Fahreigenschaften nicht optimal gewählt sind.

Der Erfindung liegt deshalb die Aufgabe zugrunde, eine Laufflächengestaltung für Reservereifen anzugeben, die verbesserte Fahreigenschaften aufweist.

Diese Aufgabe wird erfindungsgemäss dadurch gelöst, dass drei Hauptnuten vorhanden sind, die die beiden Umfangsrippen mit im wesentlichen rechteckigen Blöcken einschliessen, dass die mittlere Hauptnut in den Reifenzenit fällt, dass die äusseren Hauptnuten mit den benachbarten Entkopplungsnuten durch Quernuten verbunden sind, die geringfügig schräg zur Querrichtung gestellt sind, und dass die Profiltiefe maximal 5 mm beträgt.

Die neue Laufflächengestaltung gibt einem Reifen durch die in Umfangsrichtung verlaufenden Nuten und Rippen eine hohe Laufruhe und Spursicherheit.

Als weiterer Vorteil sind die guten Nasseigenschaften, insbesondere bezüglich Aquaplaning, zu nennen, die durch die drei Hauptnuten und vor allem durch die im Schulterbereich verlaufenden, geringfügig schräg zur Querrichtung gestellten und das Wasser seitlich ableitenden Quernuten erzielt werden.

Die beiden mittleren Umfangsrippen übernehmen die Traktion, wobei die im wesentlichen rechteckigen Blöcke aufgrund der innigen Verzahnung durch die S-förmigen Feineinschnitte zur Aufnahme besonders hoher Querkräfte geeignet sind.

Die in den beiden seitlichen Umfangsrippen angeordneten Z-förmigen Stollen bewirken in besonders günstiger Weise einen Ausgleich des in der Bodenkontaktzone auftretenden Schlupfes.

Wegen der geringen Nutentiefe eignet sich die erfindungsgemässe Laufflächengestaltung sowohl für Reifen mit Radial- als auch für solche mit Diagonalunterbau.

Vorteilhafte Ausgestaltungen der Erfindung sind den Unteransprüchen zu entnehmen.

Nachfolgend wird ein Ausführungsbeispiel der Erfindung anhand einer Zeichnung beschrieben. Es zeigen

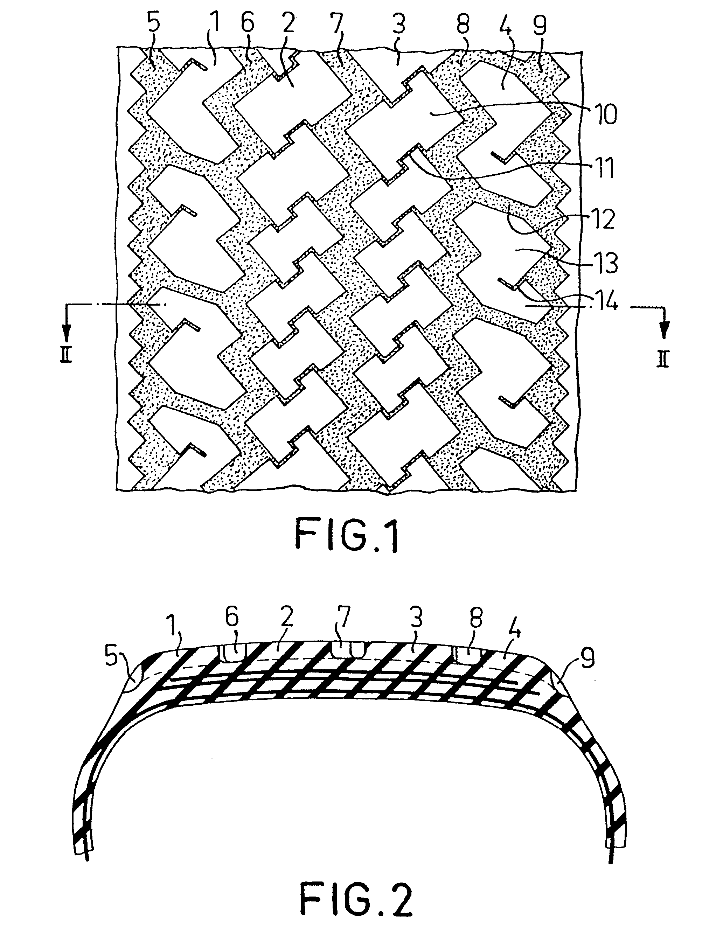

Fig. 1 eine Draufsicht auf die Lauffläche eines Fahrzeugluftreifens,

Fig. 2 einen radialen Schnitt durch den Reifen gemäss Figur 1.

Die Laufflächengestaltung des Laufstreifens weist vier Umfangsrippen 1, 2, 3, 4 und fünf Umfangsnuten 5, 6, 7, 8, 9 auf, die unter 90° zickzackförmig verlaufen.

Die drei innen liegenden Hauptnuten 6, 7, 8 von denen die mittlere in den Reifenzenit fällt, schliessen die beiden Umfangsrippen 2 und 3 ein, die aus in Reifenumfangsrichtung aufeinanderfolgenden, im wesentlichen rechteckigen Blöcken 10 bestehen, welche durch S-förmige Feineinschnitte 11 voneinander getrennt sind. Die S-förmigen Feineinschnitte 11 bewirken dabei eine innige Verzahnung der Blöcke 10.

Die Längsachse der S-förmigen Feineinschnitte 11 wie auch die Längsachse der im wesentlichen reckteckförmigen Blöcke 10 kann vorzugsweise unter einem Winkel von 30° bis 45° zur Querrichtung verlaufen. Die aufeinanderfolgenden Blöcke 10 können eine unterschiedliche Grundfläche aufweisen. Weiterhin können die Blöcke 10 der Umfangsrippe 2 gegenüber den entsprechenden der Umfangsrippe 3 unterschiedlich stark versetzt sein.

Die beiden aussen gelegenen Nuten 5, 9 dienen als Entkopplungsnuten, die die Lauffläche und die Seitenwandzonen des Reifens entkoppeln und die damit den Fahrkomfort erhöhen. Sie können gleichzeitig als Dekornuten ausgebildet sein.

Die beiden äusseren Hauptnuten 6 und 8 sind mit der ihnen jeweils benachbarten Entkopplungsnut 5, 9 durch Quernuten 12 verbunden, die geringfügig schräg zur Querrichtung gestellt sind. Die Quernuten 12 dienen vor allem dazu, Wasser seitlich abzuleiten.

Zwischen den äusseren Hauptnuten 6, 8 und den Entkopplungsnuten 5, 9 verläuft jeweils eine Umfangsrippe 1,4, die von aufeinanderfolgenden etwa Z-förmigen Stollen 13 mit relativ grosser Aufstandsfläche gebildet wird. Die einzelnen Stollen 13 werden durch die Quernuten 12 voneinander getrennt.

Auf der den Entkopplungsnuten 5, 9 zugewandten Seite weisen die Stollen 13 Feineinschnitte 14 auf, die sich etwa im Mittenbereich befinden. Die Stollen 13 erstrecken sich in Umfangsrichtung etwa über eine Länge, die von zwei aufeinanderfolgenden Blöcken 10 eingenommen wird.

## Patentansprüche

1. Laufflächengestaltung für Luftreifen, insbesondere für Kraftfahrzeuge, mit zwei Umfangsrippen (2, 3), die aus in Reifenumfangsrichtung aufeinanderfolgenden im wesentlichen rechteckigen Blöcken (10) bestehen, welche durch S-förmige Feineinschnitte (11) voneinander getrennt sind, mit mehreren unter 90° zickzackförmig umlaufenden Hauptnuten (6, 7, 8) und mit jeweils einer Entkopplungsnut (5, 9) die die Lauffläche von der Seitenwandzone des Reifens entkoppelt, dadurch gekennzeichnet, dass drei Hauptnuten (6, 7, 8) vorhanden sind, die die beiden Umfangsrippen (2, 3) mit im wesentlichen rechteckigen Blöcken (10) einschliessen, dass die mittlere Hauptnut (7) in den Reifenzenit fällt, dass die äusseren Hauptnuten (6, 8) mit den benachbarten Entkopplungsnuten (5, 9) durch Quernuten (12) verbunden sind, die geringfügig schräg zur Querrichtung gestellt sind, und dass die Profiltiefe maximal 5 mm beträgt.

2. Laufflächengestaltung nach Anspruch 1, dadurch gekennzeichnet, dass die Längsachse der Blöcke (10) und der S-förmigen Feineinschnitte (11) mit der Querrichtung einen Winkel von 30° bis 45° einschliesst.

3. Laufflächengestaltung nach Anspruch 1, dadurch gekennzeichnet, dass zwischen den äusseren Hauptnuten (6, 8) und den Entkopplungsnuten (5, 9) jeweils eine Umfangsrippe (1, 4) verläuft, die von aufeinanderfolgenden etwa Z-förmigen Stollen (13) mit grosser Aufstandsfläche gebildet wird.

4. Laufflächengestaltung nach den Ansprüchen 1 und 3, dadurch gekennzeichnet, dass sich die Z-förmigen Stollen (13) in Umfangsrichtung etwa über eine Länge erstrecken, die von zwei aufeinanderfolgenden Blöcken (10) eingenommen wird.

5. Laufflächengestaltung nach Anspruch 3, dadurch gekennzeichnet, dass die Z-förmigen Stollen (13) zumindest in ihrem mittleren Bereich Feineinschnitte (14) aufweisen, die mit den Entkopplungsnuten (5, 9) in Verbindung stehen.

6. Laufflächengestaltung nach Anspruch 1, dadurch gekennzeichnet, dass die Profiltiefe 4 mm beträgt.

**Revendications**

1. Structure de la bande de roulement de pneumatiques, notamment pour des véhicules automobiles, comportant deux nervures périphériques (2, 3), qui sont constituées par des blocs sensiblement rectangulaires (10) qui se succèdent suivant la direction périphérique du pneumatique et qui sont séparés les uns des autres par de fines encoches (11) en forme de S, et comportant plusieurs rainures principales périphériques (7, 8) s'étendant en forme de zig-zag à 90°, et des rainures respectives de découplage (5, 9), qui séparent la surface de roulement de la zone de la paroi latérale du pneumatique, caractérisée en ce qu'il est prévu trois rainures principales (6, 7, 8) qui bordent les deux nervures périphériques (2, 3) comportant des blocs sensiblement rectangulaires (10), que la rainure principale médiane (7) est ménagée dans la partie sommitale du pneumatique, que les rainures principales extérieures (6, 8) sont reliées aux rainures voisines de découplage (5, 9) par des rainures transversales (12) qui sont faiblement inclinées par rapport à la direction transversale, et que la profondeur de sculpture est égale au maximum à 5 mm.

2. Sculpture de bande de roulement selon la revendication 1, caractérisée en ce que l'axe longitudinal des blocs (10) et des fines encoches (11) en forme de S fait avec la direction transversale un angle compris entre 30° et 45°.

3. Structure de surface de roulement selon la revendication 1, caractérisée en ce qu'entre les rainures principales extérieures (7, 8) et les rainures de découplage (5, 9) s'étendent des nervures périphériques respectives (1, 4) qui sont formées par des crampons (13) successifs, approximativement en forme de Z, possédant une surface d'appui étendue.

4. Structure de surface de roulement selon les revendications 1 et 3 prises dans leur ensemble, caractérisée en ce que les crampons en forme de Z (13) s'étendent suivant la direction périphérique approximativement sur une longueur qui est occupée par deux blocs (10) successifs.

5. Structure de bande de roulement, selon la revendication 3, caractérisée en ce que les crampons en forme de Z (13) possèdent, au moins dans leur zone médiane, des encoches fines (14) qui sont reliées aux rainures de découplage (5, 9).

6. Structure de surface de roulement selon la revendication 1, caractérisée en ce que la profondeur de la sculpture est égale à 4 mm.

**Claims**

1. Tread surface pattern for pneumatic tyres, more especially for motor vehicles, having two circumferential ribs (2, 3) comprised of substantially rectangular blocks (10) which succeed one another in the circumferential direction of the tyre and are separated from one another by fine, S-shaped incisions (11), a plurality of main grooves (6, 7, 8) which are circumferential in a zigzag manner at 90°, and a respective disconnecting groove (5, 9) which disconnects the thread surface from the lateral wall area of the tyre, characterised in that three main grooves (6, 7, 8) are provided which enclose the two circumferential ribs (2, 3) with substantially rectangular blocks (10), that the central main groove (7) is located in the tyre crown, that the outer main grooves (6, 8) are connected to the adjacent disconnecting grooves (5, 9) by transverse grooves (12) which are positioned slightly inclinedly relative to the transverse direction, and that the maximum profile depth is 5 mm.

2. Tread surface pattern according to claim 1, characterised in that the longitudinal axis of the blocks (10) and of the fine, S-shaped incisions (11) forms with the transverse direction an angle of 30° to 45°.

3. Tread surface pattern according to claim 1, characterised in that a respective circumferential rib (1, 4) extends between the outer main grooves (6, 8) and the disconnecting grooves (5, 9) and is formed by successive, substantially Z-shaped supports (13) having a large protruding surface.

4. Tread surface pattern according to claim 1 and 3, characterised in that the Z-shaped supports (13) extend in the circumferential direction approximately over a length which is occupied by two successive blocks (10).

5. Tread surface pattern according to claim 3, characterised in that the Z-shaped supports (13) have, at least in their central region, fine incisions (14) which communicate with the disconnecting grooves (5, 9).

6. Tread surface pattern according to claim 1, characterised in that the profile depth is 4 mm.

1/1

FIG.1

FIG.2